# EUROPEAN PATENT SPECIFICATION

(11) **EP 4 171 056 B1**
(45) Date of publication and mention of the grant of the patent: **19.03.2025**
(21) Application number: 22203224.5
(22) Date of filing: 24.10.2022
(51) Int. Cl.: H04Q 11/00

(54) **METHOD AND APPARATUS FOR TOD MANAGEMENT IN A PON SYSTEM**
VERFAHREN UND VORRICHTUNG ZUR VERWALTUNG VON TOD
PROCÉDÉ ET APPAREIL DE GESTION DE TOD

(30) Priority: 25.10.2021 CN 202111251696
(43) Date of publication of application: 26.04.2023
(73) Proprietor: Nokia Solutions and Networks Oy, 02610 Espoo (FI)
(72) Inventor: LIU, Jie, Shanghai (CN); ZOU, Jia Bao, Shanghai (CN); WANG, Xin, Shanghai (CN); GUO, Shenping, Shanghai (CN)
(74) Representative: DREISS Patentanwälte PartG mbB

(56) References cited:
- WO-A1-2013/191608
- "ONU management and control interface (OMCI) specification: Amendment 4; G.988 (2017) Amendment 4 (09/21)", no. G.988 (2017) Amendment 4 (09/21), 6 September 2021 (2021-09-06), pages 1 - 692, XP044334993, Retrieved from the Internet <URL:https://www-api.itu.int/dms/pay/itu-t/rec/g/T-REC-G.988-202109-S!Amd4!PDF-E.pdf> [retrieved on 20211021]

## Description

### Technical Field

The present application relates to the field of passive optical network technology, in particular to a technical solution for ToD (Time of Day) management.

### Background Art

To support mobile service in F5G business scenarios, the OLT (Optical Line Terminal) and ONU (Optical Network Unit) must support time synchronization in end-to-end networks (from the time server to the small base station or endpoint of the mobile service). In 5G Mobile Back Haul over PON (Passive Optical Network) deployment scenarios, the small base stations are connected to ONU. To support the time sensitive service, the ToD information needs to be sent to the small base stations from the ONU. The ToD information of the ONU is synchronized to the OLT. To keep the ONU highly synchronized to the OLT, the OLT will send the ToD information regularly to the ONU. When detecting that the ToD information is not received in a specified period of time, the ONU will report an out-of-sync alarm to inform the operator that the ONU is no longer synchronized to the OLT. The prior art solution has the following drawbacks: 1) there is a lack of solution for ToD management in the prior art; 2) the interval of ToD information distribution on the OLT side is hard coded and not configurable; 3) the ONU software is not aware of the exact time interval of ToD information distribution on the OLT side, which depends entirely on the agreement made between the ONU and OLT teams during the design phase; 4) the out-of-sync detection behavior usually varies among different ONU vendors, which will cause critical issues in the IOP (interoperability) between OLT vendors and ONU vendors. WO 2013/191608 A1 discloses time domains in a PON. WO 2013/191608 A1 involves a transport of Time-of-Day (ToD) information based on two or more reference clocks, i.e. multiple time domains, from the OLT to the ONU over the ODN in one or more OMCI messages, in order to synchronize two or more client equipment connected to the ONU with different reference clocks. D1 discloses extending the OLT-G ME of the OMCI message for transmitting additional time domains.

### Summary of the Invention

The objective of the present application is to provide a technical solution for ToD management. To support and standardize ToD management, the present application defines new management models for OLT and ONU. In particular, new management objects are extended in the OLT MIB (Management Information Base), and the OLT-G ME (Management entity) is extended in the OMCI (ONU Management and Control Interface) specification. In addition, the present application also proposes a new out-of-sync alarming mechanism on the basis of the above-mentioned extensions.

In accordance with one aspect of the present application, there is provided a method for ToD management in OLT according to claim 1.

In some embodiments, said ToD management parameters include ToD distribution time interval and number of OLT-G message loss, wherein the method further comprises:
sending an OLT-G message with ToD information carried therein to said ONU according to said ToD distribution time interval.

In accordance with another aspect of the present application, there is provided a method for ToD management in ONU according to claim 6.

In some embodiments, said performing the corresponding ToD management operations according to said ToD management parameters comprises:
determining the time interval triggering an ONU out-of-sync alarm according to said ToD management parameters and starting an alarm timer, wherein the expiration time of said alarm timer is set as said time interval;
if the OLT-G message sent by said OLT with ToD information carried therein is received before said alarm timer expires, resetting said alarm timer and starting the timing anew;
if the OLT-G message sent by said OLT with ToD information carried therein has not been received when said alarm timer expires, reporting an out-of-sync alarm.

In accordance with another aspect of the present application, there is provided a first apparatus for ToD management in OLT according to claim 12.

In accordance with another aspect of the present application, there is provided a second apparatus for ToD management in ONU according to claim 13.

In accordance with another aspect of the present application, there is provided an OLT according to claim 14 .

In accordance with another aspect of the present application, there is provided an ONU according to claim 15.

In accordance with another aspect of the present application, there is provided a computer readable storage medium with computer programs stored thereon according to claim 16 .

In accordance with another aspect of the present application, there is provided a computer readable storage medium with computer programs stored thereon according to claim 17.

In comparison with the prior art, the present application has the following advantage: by extending new management objects in the OLT MIB and extending the OLT-G ME in the ISAM OMCI specification, ToD management with flexibility and diversity can be achieved.

### Description of the Drawings

Through reading the detailed description of the non-limiting embodiments with reference to the following drawings, other features, objects and advantages of the present application will become more obvious:
Fig. 1 shows the schematic flowchart of a method for ToD management in OLT in accordance with an embodiment of the present application;
Fig. 2 shows the schematic diagram of new management objects extended in the MIB in accordance with an example of the present application;
Fig. 3 shows the schematic flowchart of a method for ToD management in ONU in accordance with an embodiment of the present application;
Fig. 4 shows a common solution for ToD management and alarm reporting in accordance with the present application;
Fig. 5 shows the schematic flowchart of ToD management and alarm reporting in accordance with an example of the present application;
Fig. 6 shows the schematic structural diagram of a first apparatus for ToD management in OLT in accordance with an embodiment of the present application;
Fig. 7 shows the schematic structural diagram of a second apparatus for ToD management in ONU in accordance with an embodiment of the present application;
Fig. 8 shows an example system that can be used to implement the embodiments described in the present application.

The same or similar reference numbers in the drawings represent the same or similar parts.

### Detailed Description of the Embodiments

Before discussing example embodiments in more detail, it is noted that some example embodiments are described as processes or methods depicted as flowcharts. Although the flowcharts describe the operations as sequential processes, many of the operations may be performed in parallel, concurrently, or simultaneously. In addition, the order of operations may be re-arranged. The processes may be terminated when their operations are completed, but may also have additional steps not included in the drawings. The processes may correspond to methods, functions, procedures, subroutines, subprograms, etc.

The "device" mentioned in this context refers to the smart electronic device that can carry out numerical computations and/or logical computations and other predetermined processing procedures through running predetermined programs or instructions, and may comprise a processor and a memory. The program instructions prestored in the memory are executed by the processor to carry out the predetermined processing procedures. Or the predetermined processing procedures are carried out by Application Specific Integrated Circuit (ASIC), Field Programmable Gate Array (FPGA), Digital Signal Processor (DSP) and other hardware. Or it is accomplished through the combination of both.

Methods discussed hereinafter, some of which are illustrated by the flow charts, may be implemented by hardware, software, firmware, middleware, microcode, hardware description languages, or any combination thereof. When implemented by software, firmware, middleware, or microcode, the program code or code segments used to carry out the necessary tasks may be stored in a machine or computer readable medium, such as a storage medium. A processor(s) may carry out the necessary tasks.

The specific structural and functional details disclosed herein are merely representative and serve the purpose of describing example embodiments of the present application. However, the present application may be embodied in many alternative forms, and should not be construed as limited to only the embodiments set forth herein. The scope of protection is defined by the claims.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated items that are listed.

The terminology used herein is for the purpose of describing particular embodiments only and is not intended to be limiting of example embodiments. As used herein, the singular form "a", "an" and "the" is intended to include the plural form as well, unless the context clearly indicates otherwise. It will be further understood that the terms "comprises", "comprising", "includes" and/or "including", when used herein, specify the presence of stated features, integers, steps, operations, elements and/or components, and do not preclude the presence or addition of one or more other features, integers, steps, operations, elements, components and/or combinations thereof.

It should also be noted that in some alternative implementations, the functions/acts mentioned may occur out of the order denoted in the figures. For example, two figures shown in succession may in fact be performed substantially simultaneously or may sometimes be performed in the reverse order, depending upon the functions/acts involved.

The present application will be described in more detail in the following in connection with the drawings.

For Mobile Back/Middle/Front Haul, the xPON solution is the major candidate due to its low cost and high bandwidth. In 5G MxH (Mobile Front/Middle/Back Haul) over PON networks, the uplinks of the small base stations are connected to the ONU, and the ToD information is distributed by the ONU. The ONU is fully synchronized with the OLT. In ITU-T standards G.984.3 section 10.4.6 and G.987.3 section 13.2, only the ToD distribution mechanisms on transmission layer of GPON and XG-PON are described. The ToD information is carried with the OLT-G message. Immediately following system startup, the OLT-G message will be distributed to the ONU by the OLT.

It is found out by the applicant that when the ToD information is introduced, the OLT-G message needs to be distributed with a specific time interval while the system is working properly, which is not clearly described in ITU-T G.984.4 and ITU-T G.988.4. This means that the OLT and ONU vendors will implement OLT-G message distribution without a standard management interface to follow, and therefore different vendors will implement OLT-G message distribution with various behaviors. Even for the same vendor, the implementations of OLT-G message distribution are not completely identical. This will cause great trouble for the IOP between OLT and ONU. It is also found out by the applicant that when trying to support end-to-end noise transfer on the xPON (GPON/XG(S)PON/XGSPON) system, there will be strict time accuracy requirement on the ONU side. Due to the cost limitation, it is not possible to use high precision crystal oscillator as OLT, and therefore the OLT-G message needs to be distributed from the OLT to the ONU frequently, e.g., 32 times per second, so as to make sure the ONU can follow the OLT closely. Since no relevant OMCI has been defined so far, the ToD synchronization distribution methods on the OLT and ONU sides are hard coded and not configurable. Therefore, it is difficult to monitor and manage the ToD synchronization for various ONUs from different vendors. In the meanwhile, because the distribution speed of ToD information can't be configured, there is no way to optimize the distribution speed of ToD information according to customer requirement. When the ONU didn't receive the OLT-G message in the specific time slot, the ONU will assume that the time synchronization is lost and report an out-of-sync alarm (in the prior art, the ONU reports the out-of-sync alarm based on its proprietary algorithm, and there is no standard to follow). However, the difficult lies in that the ONU is not aware of the exact time interval of OLT-G message distribution, and that the OLT is not aware of the reporting mechanism of ONU alarm. The fact that the agreement made between the ONU and OLT teams during the design phase is all that can be relied upon makes the implementation complex and hard to maintain consistency. In the prior art, the usual method is to set the out-of-sync detection time of the ONU long enough and try to make it suitable for all the OLTs from different vendors, which will lead to the alarm not being reported in a timely manner. In addition, because of the inconsistent implementation on the ONU side, the alarm report time of the same OLT will be different when the OLT-G message is lost. It is also found out by the applicant that there lacks the support for ToD management in the prior art.

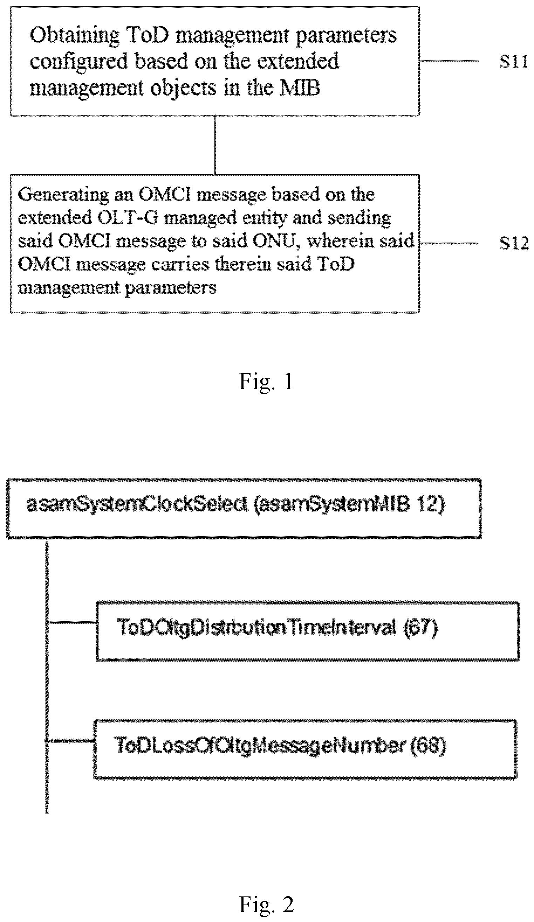

Fig. 1 shows the schematic flowchart of a method for ToD management in OLT in accordance with an embodiment of the present application. The method comprises a step S11 and a step S12. In step S11, the OLT obtains ToD management parameters configured based on the extended management objects in the MIB; in step S12, the OLT generates an OMCI message based on the extended OLT-G managed entity and sends said OMCI message to said ONU, wherein said OMCI message carries therein said ToD management parameters.

In step S11, the OLT obtains ToD management parameters configured based on the extended management objects in the MIB. In some embodiments, in order to achieve universality, it is needed to configure data from the OLT side, wherein the configuration is defined at the system level and suitable for all the ONUs under that OLT node. Consequently, , all the ONUs under one OLT node can use the same configuration to implement ToD management. In some embodiments, the OLT receives the configuration from the NMS (Network Management System) or from the operator. In some embodiments, the operation interface used for performing the configuration operations can support SNMP (Simple Network Management Protocol), CLI (Command Line Interface), NCY, etc.

In some embodiments, said ToD management parameters include any parameter used for ToD management. In some embodiments, said ToD management parameters include at least any one of the following: ToD distribution time interval; number of OLT-G message loss; maximum timeout threshold of OLT-G loss; ToD supportability report indication; ToD enablement information. Wherein, said ToD distribution time interval is used for configuring the time interval of ToD information distribution towards the ONU, for example, if the ToD distribution time interval is configured as 60s, the OLT distributes the ToD information to the ONU every 60s; said number of OLT-G message loss is used for configuring the maximum number of ToD loss to trigger the out-of-sync alarm; said maximum timeout threshold of OLT-G loss is used for configuring the maximum timeout threshold to trigger the out-of-sync alarm; said ToD supportability report indication is used for indicating the ONU to report whether the ToD function is supported; said ToD enablement information is used for indicating whether the ToD function is enabled. It should be noted that the ToD management parameters mentioned above are merely examples, and any parameter used for ToD management should be included within the scope of the ToD management parameters mentioned in the present application.

In some embodiments, said ToD management parameters include ToD distribution time interval and number of OLT-G message loss. With the method for SNMP management as an example, the definition of the SNMP MIB will be introduced below in an exemplary manner only. Other methods for management have the similar idea, and will not be introduced in detail here respectively. Fig. 2 shows the schematic diagram of new management objects extended in the MIB in accordance with an example of the present application. Two new objects are defined in the NTR MIB for managing the ToD distribution in the OLT-G message, i.e., ToDOltgDistribution TimeInterval (67) and ToDLossOfOltgMessageNumber (68) shown in Fig. 2. ToDOltgDistribution TimeInterval corresponds to the ToD distribution time interval of the OLT-G message. In order to follow the OLT closely, the ToD information needs to be distributed regularly from the OLT to the ONU. The OLT message will always be distributed in the startup phase regardless of the interval, which is suitable for a system that is running properly. The OLT-G packets will be sent regularly according to the ToD distribution time interval. As an example, the value range of this object is (0,3600) with the default value being 60 and the unit being seconds. ToDLossOfOltgMessageNumber corresponds to the number of OLT-G message loss, i.e., corresponds to the number of ToD information loss or the threshold for out-of-sync alarm reporting. Once the number of consecutive OLT-G messages that are not received on the ONU side reaches the value configured for the object, the ONU will assume that the synchronization with the OLT is lost. As an example, the value range of this object is 1 to 16 with the default value being 3.

It should be noted that for other ToD management parameters, the corresponding management objects can be extended similarly in the MIB. For example, three management objects corresponding respectively to the maximum timeout threshold of OLT-G loss, ToD supportability report indication and ToD enablement information are extended in the MIB.

In step S12, the OLT generates an OMCI message based on the extended OLT-G managed entity and sends said OMCI message to said ONU, wherein said OMCI message carries therein said ToD management parameters.

In some embodiments, said ToD management parameters include ToD distribution time interval and number of OLT-G message loss. When the ONU comes on line in the startup phase, the OLT generates an OMCI message based on the extended OLT-G managed entity and sends said OMCI message to said ONU, wherein said OMCI message carries therein said ToD distribution time interval and said number of OLT-G message loss.

In order to deliver the configuration intended for the newly extended management objects to the ONU, the OMCI needs to be updated to support the new configuration. Since the definition of time information is almost the same in ITU-T G.984.4 and G.988.4, only G.988.4 will be described in detail here. The ToD information is carried in the OLT-G message to be distributed to the ONU. Based on the OLT-G message structure as defined in G.988.4 section 9.12.2, new attributes can be introduced respectively for each ToD management parameter. It should be noted here that except for its name, the OLT-G ME is identical to the OLT B-PON ME documented in ITU-T G.983.2. This optional ME identifies the OLT to which the ONU is connected. This ME provides the ONU with a way of configuring itself to achieve interoperability with a certain OLT. The ONU that supports this ME will automatically create an instance of it. Immediately following the startup phase, the OLT shall set the ONU to the desired configuration. Interpretation of the attributes is a matter for negotiation between the two vendors involved. In addition, one instance of this ME is associated with the ONU managed entity.

As an example, said ToD management parameters include ToD distribution time interval and number of OLT-G message loss, and the extended OLT-G attributes include: **Managed entity id, OLT vendor id, Equipment id, Version, ToD Distribution Time Interval, Number of loss of OLT message, Actions** and **Notifications.** Wherein, **Managed entity id** uniquely identifies each instance of this managed entity. There is only one instance here, number 0. (R) (mandatory) (2 bytes). **OLT vendor id** identifies the OLT vendor. It is the same as the 4 most significant bytes of the ONT serial number specified in [ITU-T G.984.3]. Upon instantiation, this attribute comprises all spaces. (R, W) (mandatory) (4 bytes). **Equipment id** may be used to identify the specific type of the OLT. The default value of all spaces indicates that equipment ID information is not available or applicable to the OLT being represented. (R, W) (mandatory) (20 bytes). **Version** identifies the version of the OLT as defined by the vendor. The default left-justified ASCII string "0" (padded with trailing nulls) indicates that version information is not available or applicable to the OLT being represented. (R, W) (mandatory) (14 bytes). Wherein, **ToD Distribution Time Interval** and **Number of loss of OLT message** are two newly extended attributes. **ToD Distribution Time Interval** identifies the ToD distribution time interval with the default value being 60 seconds and the maximum value being 3600 seconds. (R, W) (mandatory) (2 bytes). **Number of loss of OLT message** identifies the number of OLT-G message loss on the ONU side. If the ONU fails to receive the OLT-G messages from the OLT by the configured number, the ONU will raise an out-of-sync alarm. The default value is 3. The maximum value is 16. (R, W) (mandatory) (2 bytes). As for other ToD management parameters, new attributes introduced by the OLT-G ME can be extended similarly, and detailed description thereof will be omitted herein.

In some embodiments, said ToD management parameters include ToD distribution time interval. The method further comprises a step S13. In step S13, the OLT sends an OLT-G message with ToD information carried therein to said ONU according to said ToD distribution time interval. For example, if the operator configures the ToD distribution time interval as 60s, according to this configuration, the OLT distributes an OLT-G message with ToD information carried therein to the ONU every 60s.

In some embodiments, said step S13 further comprises: starting an OLT-G distribution timer, wherein the expiration time of said OLT-G distribution timer is set as said ToD distribution time interval; each time when said OLT-G distribution timer expires, sending an OLT-G message with ToD information carried therein to said ONU, resetting said OLT-G distribution timer, and starting the timing anew. Consequently, the OLT can distribute the ToD information regularly to the ONU based on the ToD distribution time interval that is configured, and thereby supporting manageable distribution of the ToD information.

It should be noted that there is no strict order in executing said step S12 and said step S13. For example, the OLT may execute step S12 upon obtaining configuration data, and at the same time begin to execute step S13 to distribute the ToD information to the ONU; for another example, the OLT may execute step S12 first upon obtaining configuration data, and later at some point begin to execute step S13 based on predetermined logic to distribute the ToD information to the ONU.

In some embodiments, following said step S11, the method further comprises a step S14. In step S14, the OLT saves said ToD management parameters in a database.

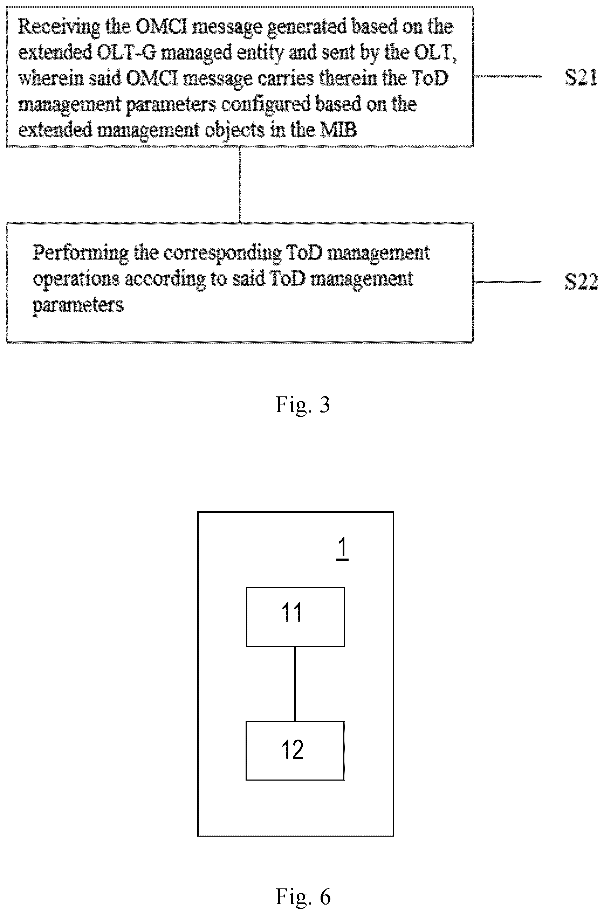

Fig. 3 shows the schematic flowchart of a method for ToD management in ONU in accordance with an embodiment of the present application. The method comprises a step S21 and a step S22. In step S21, the ONU receives the OMCI message generated based on the extended OLT-G managed entity and sent by the OLT, wherein said OMCI message carries therein the ToD management parameters configured based on the extended management objects in the MIB. In step S22, the ONU performs the corresponding ToD management operations according to said ToD management parameters.

In step S21, the ONU receives the OMCI message generated based on the extended OLT-G managed entity and sent by the OLT, wherein said OMCI message carries therein the ToD management parameters configured based on the extended management objects in the MIB. Since the ToD management parameters and the extended OLT-G managed entity have already been described in detail in the embodiments above, the description thereof will not be repeated here.

In step S22, the ONU performs the corresponding ToD management operations according to said ToD management parameters.

In some embodiments, the ONU will synchronize with the OLT via the OLT-G message, and start an alarm timer to detect the out-of-sync alarm. Said step S22 further comprises a step S221, a step S222 and a step S223.

In step S221, the ONU determines the time interval triggering an ONU out-of-sync alarm according to said ToD management parameters and starts an alarm timer, wherein the expiration time of said alarm timer is set as said time interval.

In some embodiments, said ToD management parameters include maximum timeout threshold of OLT-G loss. Said determining the time interval triggering an ONU out-of-sync alarm according to said ToD management parameters comprises: determining said maximum timeout threshold of OLT-G loss as the time interval triggering an ONU out-of-sync alarm. For example, the operator sets the maximum timeout threshold of OLT-G loss as 1200s. The OLT sends this parameter to the ONU. The ONU starts an alarm timer based on this parameter. The expiration time of the alarm timer is set as 1200s.

In some embodiments, said ToD management parameters include ToD distribution time interval and number of OLT-G message loss. Said determining the time interval triggering an ONU out-of-sync alarm according to said ToD management parameters comprises: calculating the time interval triggering an ONU out-of-sync alarm according to said ToD distribution time interval and said number of OLT-G message loss. Preferably, the time interval triggering an ONU out-of-sync alarm is the product of said ToD distribution time interval multiplied with said number of OLT-G message loss. In some embodiments, the ONU extracts the configured ToD distribution time interval and number of OLT-G message loss from the OMCI message that is received. Then the ONU calculates the time interval triggering an ONU out-of-sync alarm according to said ToD distribution time interval and said number of OLT-G message loss. Then the ONU starts an alarm timer, wherein the expiration time of the alarm timer is set as the determined time interval. As an example, when the ToD distribution time interval is 60s and the number of OLT-G message loss is 3, the expiration time of the alarm timer is 60*3=180s. It should be noted that given that the expiration time of the alarm timer is the product of the ToD distribution time interval multiplied with the number of OLT-G message loss, if the OLT-G message has not been received when the alarm timer expires, it indicates that the number of consecutive ToD information loss has reached the configured number of OLT-G message loss. An alarm reporting procedure may be started at this point. As in the example above, if the alarm timer expires, it indicates that no OLT-G message has been received from the OLT in the last 180s, i.e., the number of consecutive OLT-G message (or ToD information) loss has reached 3. An alarm reporting procedure may be started at this point.

In some embodiments, the ToD management parameters include not only ToD distribution time interval and number of OLT-G message loss, but also maximum timeout threshold of OLT-G loss. An initial time interval may first be calculated based on the ToD distribution time interval and the number of OLT-G message loss. Then the time interval triggering an ONU out-of-sync alarm is finally determined based on the initial time interval and said maximum timeout threshold of OLT-G loss. For example, when comparing the initial time interval with the maximum timeout threshold of OLT-G loss, if the initial time interval is greater than or equal to the maximum timeout threshold of OLT-G loss, the maximum timeout threshold of OLT-G loss is determined as the final time interval, otherwise the initial time interval is determined as the final time interval.

In step S222, if the OLT-G message sent by said OLT with ToD information carried therein is received before said alarm timer expires, the ONU resets said alarm timer and starts the timing anew. In some embodiments, before the alarm timer expires, the ONU resets the alarm timer whenever an OLT-G message is received from the OLT. In this case, the ONU might or might not have suffered loss of ToD information. However, the number of consecutive ToD information loss is less than the configured number of OLT-G message loss, i.e., the condition for alarm reporting is not met.

In step S223, if the OLT-G message sent by said OLT with ToD information carried therein has not been received when said alarm timer expires, the ONU reports an out-of-sync alarm. If the OLT-G message sent by said OLT with ToD information carried therein has not been received when said alarm timer expires, it indicates that the number of consecutive ToD information loss has reached the configured number of OLT-G message loss, i.e., the condition for alarm reporting is met, and an out-of-sync alarm needs to be reported. In some embodiments, the ONU reports the out-of-sync alarm to the OLT. Upon receiving the out-of-sync alarm, the OLT reports it to the NMS. In some embodiments, the ONU reports the out-of-sync alarm to the ACS (Auto-Configuration Server). In some embodiments, the ONU reports the out-of-sync alarm to the OLT and the ACS at the same time. Upon receiving the out-of-sync alarm, the OLT reports it to the NMS. In some embodiments, due to optical fiber disconnection, communication loss and other unexpected reasons, the OLT might not be able to transmit the OLT-G message successfully to the ONU.

In some embodiments, the method further comprises: upon receiving the OLT-G message sent by said OLT with ToD information carried therein again after having reported the out-of-sync alarm, the ONU resetting said alarm timer, starting the timing anew, and clearing the out-of-sync alarm. In some embodiments, the OLT is not able to transmit the OLT-G message successfully to the ONU due to communication loss or optical fiber disconnection. When the communication or optical fiber connection is restored between the OLT and the ONU, upon receiving the OLT-G message sent by the OLT again, the ONU resets the alarm timer, starts the timing anew, and clears the out-of-sync alarm.

In some embodiments, said ToD management parameters include ToD supportability report indication. Said step S22 comprises: obtaining the ToD supportability information corresponding to said ONU, generating an OMCI message according to said ToD supportability information, and sending the generated OMCI message to said OLT. In some embodiments, said ToD supportability report indication can be sent by defining the relevant OMCI, e.g., extending the OMCI response message, such as adding a ToD supportability attribute, to carry the ToD supportability information. In some embodiments, the ToD supportability information can be carried by the reserved fields as defined in the current OMCI.

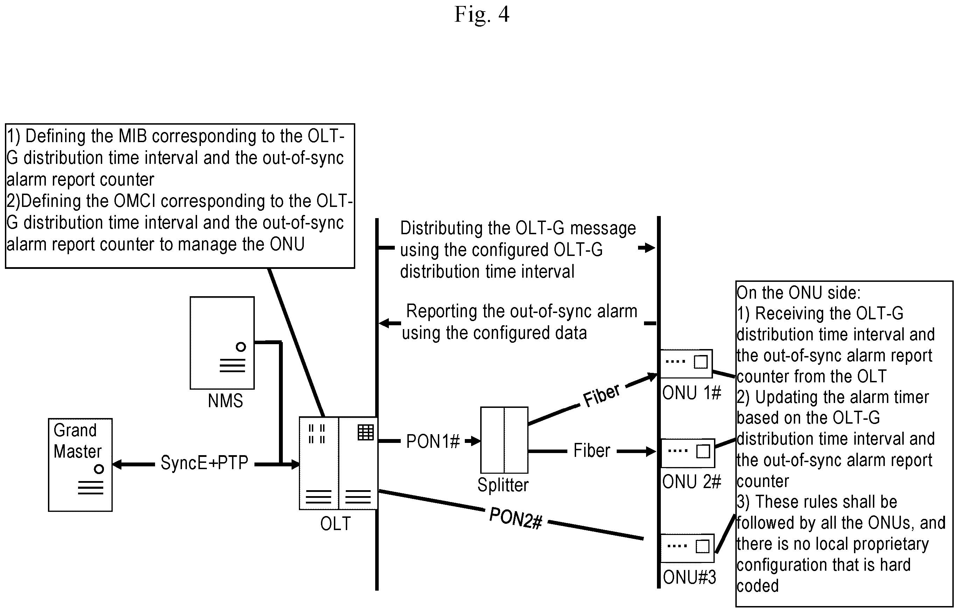

In some embodiments, in order to support manageable distribution of the ToD information and standardize the reporting mechanism for the loss of ToD information alarm, the present application defines a new management model for OLT and ONU, and proposes a common solution for ToD management and alarm reporting. This management model consists of three parts: 1) Two new management objects for managing the ToD distribution in the OLT-G message are extended in the OLT NTR MIB. Specifically, a new MIB object is defined for the ToD distribution time interval (might also be referred to as "OLT-G distribution time interval" in the context) at the system level, and another new MIB object is defined for the number of OLT-G message loss (might also be referred to as "out-of-sync alarm report counter" in the context) at the system level. If the number of consecutive loss of ToD information detected on the ONU side reaches the configured number of OLT-G message loss, the ONU will report an out-of-sync alarm to indicate the loss of ToD information and out-of-sync with the OLT. 2) The OMCI is defined to manage the ONU. The OLT-G ME is extended in the ISAM OMCI. Specifically, two attributes (corresponding to two managed entities in the MIB) are extended. For example, new attributes **"Tod Distribution Time Interval"** and **"Number of loss of OLT message"** are extended in the OLT-G, with **"Tod Distribution Time Interval"** corresponding to the Tod distribution time interval and **"Number of loss of OLT message"** corresponding to the number of OLT-G message loss. 3) The ToD handling mechanism of ONU is updated and the alarm is reported with the configured data. Specifically: the OMCI library is updated to support the new OLT-G message; a common algorithm for determining OLT-G message reception is established according to the configured ToD information distribution interval; if the number of consecutive loss of ToD information on the ONU side reaches the configured number of OLT-G message loss, an out-of-sync alarm is reported. Fig. 4 shows a common solution for ToD management and alarm reporting in accordance with the present application, wherein the OLT defines the MIB for the OLT-G distribution time interval and the out-of-sync alarm report counter, and defines the OMCI for the OLT-G distribution time interval and the out-of-sync alarm report counter to manage the ONU; the OLT distributes the OLT-G message to the ONU using the OLT-G distribution time interval that is configured, and the ONU reports the out-of-sync alarm using the configured data; on the ONU side: 1) receiving the OLT-G distribution time interval and the out-of-sync alarm report counter; 2) updating the out-of-sync alarm report counter based on the OLT-G distribution time interval and the out-of-sync alarm report counter; 3) these rules shall be followed by all the ONUs, and there is no local proprietary configuration that is hard coded. This common solution is suitable for all the GPON/XG(S)PON/XGSPON products that support ToD.

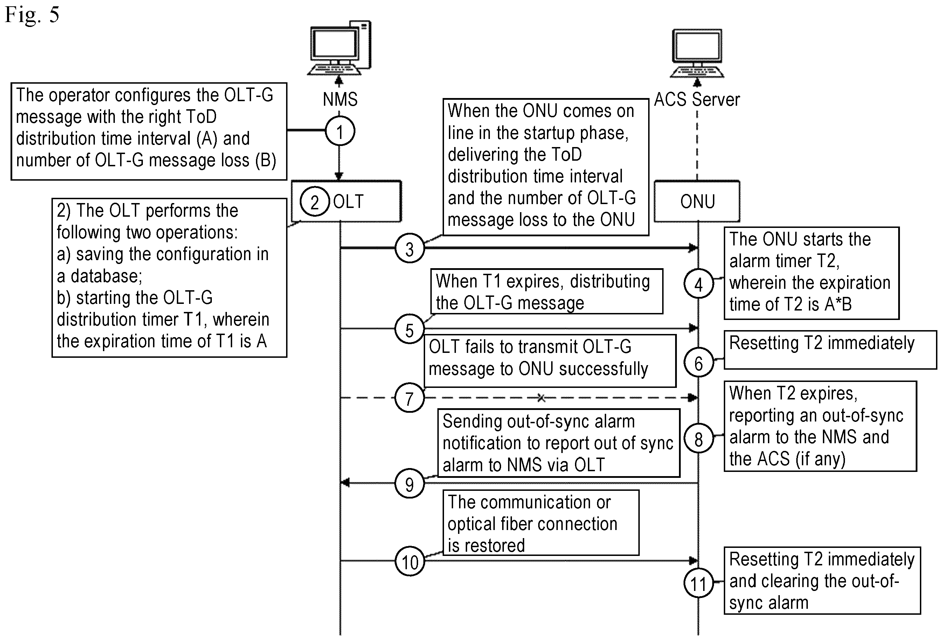

Fig. 5 shows the schematic flowchart of ToD management and alarm reporting in accordance with an example of the present application. The detailed process is as follows: 1) the operator configures the OLT-G message with the right ToD distribution time interval (A) and number of OLT-G message loss (B); 2) the OLT performs the following two operations: a) saving the configuration in a database; b) starting the OLT-G distribution timer T1, wherein the expiration time of T1 is A; 3) when the ONU comes on line in the startup phase, the OLT delivers the ToD distribution time interval and the number of OLT-G message loss to the ONU; 4) upon receiving the ToD distribution time interval and the number of OLT-G message loss, the ONU starts the alarm timer T2, wherein the expiration time of T2 is A*B; 5) when T1 expires, the OLT sends an OLT-G message to the ONU, resets T1, and starts the timing anew; 6) if the OLT-G message from the OLT is received before T2 expires, the ONU resets T2 and starts the timing anew; 7) due to optical fiber disconnection, communication loss and other unexpected reasons, the OLT fails to transmit the OLT-G message to the ONU successfully; 8) if the OLT-G message from the OLT has not been received by the ONU when T2 expires, the ONU reports an out-of-sync alarm to the NMS and the ACS (if any); 9) the ONU sends an out-of-sync alarm notification to the OLT, to report the out-of-sync alarm to the NMS via the OLT (operation 9 being the operation of reporting the out-of-sync alarm to the NMS in operation 8); 10) the communication or optical fiber connection is restored between the OLT and the ONU; 11) the ONU resets the alarm timer, starts the timing anew, and clears the out-of-sync alarm. It should be noted that the numbering of the operations shown in Fig. 5 does not represent the actual order of execution.

Based on the common solution for ToD management and alarm reporting described above, by extending new management objects in the OLT MIB and extending the OLT-G ME in the ISAM OMCI specification, the ToD distribution time interval and the number of OLT-G message loss can be configured, thereby achieving manageable distribution of the ToD information and the out-of-sync alarm reporting mechanism, which is beneficial for the IOP between OLT and ONU; in addition, this solution enables customizing the sensitivity of alarm reporting according to customer requirement, and therefore is extremely flexible.

It should be noted that the aforementioned Fig. 4 and Fig. 5 describe the corresponding ToD management and alarming mechanism only under the scenario where the ToD management parameters include ToD distribution time interval and number of OLT-G message loss. The management based on other ToD management parameters can be achieved using the similar management idea, and will not be described in detail again.

In accordance with the solution of the present application, by extending new management objects in the OLT MIB and extending the OLT-G ME in the ISAM OMCI specification, ToD management with flexibility and diversity can be achieved.

Fig. 6 shows the schematic structural diagram of a first apparatus for ToD management in OLT in accordance with an embodiment of the present application. The first apparatus 1 comprises a first obtaining means 11 and a first sending means 12. The first obtaining means 11 is used for obtaining ToD management parameters configured based on the extended management objects in the MIB; the first sending means 12 is used for generating an OMCI message based on the extended OLT-G managed entity and sending said OMCI message to said ONU, wherein said OMCI message carries therein said ToD management parameters.

The first obtaining means 11 obtains ToD management parameters configured based on the extended management objects in the MIB. In some embodiments, in order to achieve universality, it is needed to configure data from the OLT side, wherein the configuration is defined at the system level and suitable for all the ONUs under that OLT node. Consequently, all the ONUs under one OLT node can use the same configuration to implement ToD management. In some embodiments, the first obtaining means 11 receives the configuration from the NMS (Network Management System) or from the operator. In some embodiments, the operation interface used for performing the configuration operations can support SNMP (Simple Network Management Protocol), CLI (Command Line Interface), NCY, etc.

In some embodiments, said ToD management parameters include any parameter used for ToD management. In some embodiments, said ToD management parameters include at least any one of the following: ToD distribution time interval; number of OLT-G message loss; maximum timeout threshold of OLT-G loss; ToD supportability report indication; ToD enablement information. Wherein, said ToD distribution time interval is used for configuring the time interval of ToD information distribution towards the ONU, for example, if the ToD distribution time interval is configured as 60s, the OLT distributes the ToD information to the ONU every 60s; said number of OLT-G message loss is used for configuring the maximum number of ToD loss to trigger the out-of-sync alarm; said maximum timeout threshold of OLT-G loss is used for configuring the maximum timeout threshold to trigger the out-of-sync alarm; said ToD supportability report indication is used for indicating the ONU to report whether the ToD function is supported; said ToD enablement information is used for indicating whether the ToD function is enabled. It should be noted that the ToD management parameters mentioned above are merely examples, and any parameter used for ToD management should be included within the scope of the ToD management parameters mentioned in the present application.

In some embodiments, said ToD management parameters include ToD distribution time interval and number of OLT-G message loss. With the method for SNMP management as an example, the definition of the SNMP MIB will be introduced below in an exemplary manner only. Other methods for management have the similar idea, and will not be introduced in detail here respectively. Fig. 2 shows the schematic diagram of new management objects extended in the MIB in accordance with an example of the present application. Two new objects are defined in the NTR MIB for managing the ToD distribution in the OLT-G message, i.e., ToDOltgDistribution TimeInterval (67) and ToDLossOfOltgMessageNumber (68) shown in Fig. 2. ToDOltgDistribution TimeInterval corresponds to the ToD distribution time interval of the OLT-G message. In order to follow the OLT closely, the ToD information needs to be distributed regularly from the OLT to the ONU. The OLT message will always be distributed in the startup phase regardless of the interval, which is suitable for a system that is running properly. The OLT-G packets will be sent regularly according to the ToD distribution time interval. As an example, the value range of this object is (0,3600) with the default value being 60 and the unit being seconds. ToDLossOfOltgMessageNumber corresponds to the number of OLT-G message loss, i.e., corresponds to the number of ToD information loss or the threshold for out-of-sync alarm reporting. Once the number of consecutive OLT-G messages that are not received on the ONU side reaches the value configured for this object, the ONU will assume that the synchronization with the OLT is lost. As an example, the value range of this object is 1 to 16 with the default value being 3.

It should be noted that for other ToD management parameters, the corresponding management objects can be extended similarly in the MIB. For example, three management objects corresponding respectively to the maximum timeout threshold of OLT-G loss, ToD supportability report indication and ToD enablement information are extended in the MIB.

The first sending means 12 is used for generating an OMCI message based on the extended OLT-G managed entity and sending said OMCI message to said ONU, wherein said OMCI message carries therein said ToD management parameters.

In some embodiments, said ToD management parameters include ToD distribution time interval and number of OLT-G message loss. When the ONU comes on line in the startup phase, the first sending means 12 generates an OMCI message based on the extended OLT-G managed entity and sends said OMCI message to said ONU, wherein said OMCI message carries therein said ToD distribution time interval and said number of OLT-G message loss.

In order to deliver the configuration intended for the newly extended management objects to the ONU, the OMCI needs to be updated to support the new configuration. Since the definition of time information is almost the same in ITU-T G.984.4 and G.988.4, only G.988.4 will be described in detail here. The ToD information is carried in the OLT-G message to be distributed to the ONU. Based on the OLT-G message structure as defined in G.988.4 section 9.12.2, new attributes can be introduced respectively for each ToD management parameter. It should be noted here that except for its name, the OLT-G ME is identical to the OLT B-PON ME documented in ITU-T G.983.2. This optional ME identifies the OLT to which the ONU is connected. This ME provides the ONU with a way of configuring itself to achieve interoperability with a certain OLT. The ONU that supports this ME will automatically create an instance of it. Immediately following the startup phase, the OLT shall set the ONU to the desired configuration. Interpretation of the attributes is a matter for negotiation between the two vendors involved. In addition, one instance of this ME is associated with the ONU managed entity.

As an example, said ToD management parameters include ToD distribution time interval and number of OLT-G message loss, and the extended OLT-G attributes include: **Managed entity id, OLT vendor id, Equipment id, Version, ToD Distribution Time Interval, Number of loss of OLT message, Actions** and **Notifications.** Wherein, **Managed entity id** uniquely identifies each instance of this managed entity. There is only one instance here, number 0. (R) (mandatory) (2 bytes). **OLT vendor id** identifies the OLT vendor. It is the same as the 4 most significant bytes of the ONT serial number specified in [ITU-T G.984.3]. Upon instantiation, this attribute comprises all spaces. (R, W) (mandatory) (4 bytes). **Equipment id** may be used to identify the specific type of the OLT. The default value of all spaces indicates that equipment ID information is not available or applicable to the OLT being represented. (R, W) (mandatory) (20 bytes). **Version** identifies the version of the OLT as defined by the vendor. The default left-justified ASCII string "0" (padded with trailing nulls) indicates that version information is not available or applicable to the OLT being represented. (R, W) (mandatory) (14 bytes). Wherein, **ToD Distribution Time Interval** and **Number of loss of OLT message** are two newly extended attributes. **ToD Distribution Time Interval** identifies the ToD distribution time interval with the default value being 60 seconds and the maximum value being 3600 seconds. (R, W) (mandatory) (2 bytes). **Number of loss of OLT message** identifies the number of OLT-G message loss on the ONU side. If the ONU fails to receive the OLT-G messages from the OLT by the configured number, the ONU will raise an out-of-sync alarm. The default value is 3, and the maximum value is 16. (R, W) (mandatory) (2 bytes). As for other ToD management parameters, new attributes introduced by the OLT-G ME can be extended similarly, and detailed description thereof will be omitted herein.

In some embodiments, said ToD management parameters include ToD distribution time interval. The first apparatus further comprises a second sending means (not shown in the figure). The second sending means is used for sending an OLT-G message with ToD information carried therein to said ONU according to said ToD distribution time interval. For example, if the operator configures the ToD distribution time interval as 60s, according to this configuration, the second sending means in the OLT distributes an OLT-G message with ToD information carried therein to the ONU every 60s.

In some embodiments, said second sending means further comprises: starting an OLT-G distribution timer, wherein the expiration time of said OLT-G distribution timer is set as said ToD distribution time interval; each time when said OLT-G distribution timer expires, sending an OLT-G message with ToD information carried therein to said ONU, resetting said OLT-G distribution timer, and starting the timing anew. Consequently, the OLT can distribute the ToD information regularly to the ONU based on the ToD distribution time interval that is configured, and thereby supporting manageable distribution of the ToD information.

It should be noted that there is no strict order of execution between said first sending means 12 and said second sending means. For example, the OLT may trigger the first sending means 12 to start performing operations upon obtaining configuration data, and at the same time trigger the second sending means to start distributing the ToD information to the ONU; for another example, the OLT may trigger the first sending means 12 to start performing operations first upon obtaining configuration data, and later at some point trigger the second sending means to start distributing the ToD information to the ONU based on predetermined logic.

In some embodiments, the first apparatus further comprises a saving means (not shown in the figure) for performing operations after the first sending means 12. The saving means is used for saving said ToD distribution time interval and said number of OLT-G message loss in a database.

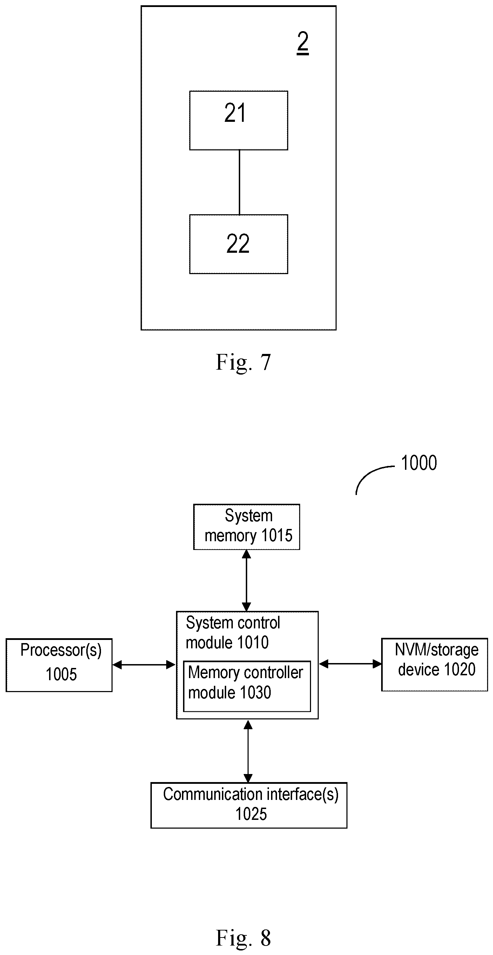

Fig. 7 shows the schematic structural diagram of a second apparatus for ToD management in ONU in accordance with an embodiment of the present application. The second apparatus 2 comprises a receiving means 21 and a managing means 22. The receiving means 21 is used for receiving the OMCI message generated based on the extended OLT-G managed entity and sent by the OLT, wherein said OMCI message carries therein the ToD management parameters configured based on the extended management objects in the MIB. The managing means 22 is used for performing the corresponding ToD management operations according to said ToD management parameters.

The receiving means 21 receives the OMCI message generated based on the extended OLT-G managed entity and sent by the OLT, wherein said OMCI message carries therein the ToD management parameters configured based on the extended management objects in the MIB. Since the ToD management parameters and the extended OLT-G managed entity have already been described in detail in the embodiments above, the description thereof will not be repeated here.

The managing means 22 performs the corresponding ToD management operations according to said ToD management parameters.

In some embodiments, the ONU will synchronize with the OLT via the OLT-G message, and start an alarm timer to detect the out-of-sync alarm. The managing means 22 further comprises a determining means (not shown in the figure), a retiming means (not shown in the figure) and an alarming means (not shown in the figure).

The determining means determines the time interval triggering an ONU out-of-sync alarm according to said ToD management parameters and starts an alarm timer, wherein the expiration time of said alarm timer is set as said time interval.

In some embodiments, said ToD management parameters include maximum timeout threshold of OLT-G loss. Said determining the time interval triggering an ONU out-of-sync alarm according to said ToD management parameters comprises: determining said maximum timeout threshold of OLT-G loss as the time interval triggering an ONU out-of-sync alarm. For example, the operator sets the maximum timeout threshold of OLT-G loss as 1200s. The OLT sends this parameter to the ONU. The ONU starts an alarm timer based on this parameter. The expiration time of the alarm timer is set as 1200s.

In some embodiments, said ToD management parameters include ToD distribution time interval and number of OLT-G message loss. Said determining the time interval triggering an ONU out-of-sync alarm according to said ToD management parameters comprises: calculating the time interval triggering an ONU out-of-sync alarm according to said ToD distribution time interval and said number of OLT-G message loss. Preferably, the time interval triggering an ONU out-of-sync alarm is the product of said ToD distribution time interval multiplied with said number of OLT-G message loss. In some embodiments, the managing means 22 extracts the configured ToD distribution time interval and number of OLT-G message loss from the OMCI message that is received. Then the managing means 22 calculates the time interval triggering an ONU out-of-sync alarm according to said ToD distribution time interval and said number of OLT-G message loss. Then the managing means 22 starts an alarm timer, wherein the expiration time of the alarm timer is set as the determined time interval. As an example, when the ToD distribution time interval is 60s and the number of OLT-G message loss is 3, the expiration time of the alarm timer is 60*3=180s. It should be noted that given that the expiration time of the alarm timer is the product of the ToD distribution time interval multiplied with the number of OLT-G message loss, if the OLT-G message has not been received when the alarm timer expires, it indicates that the number of consecutive ToD information loss has reached the configured number of OLT-G message loss. An alarm reporting procedure may be started at this point. As in the example above, if the alarm timer expires, it indicates that no OLT-G message has been received from the OLT in the last 180s, i.e., the number of consecutive OLT-G message (or ToD information) loss has reached 3. An alarm reporting procedure may be started at this point.

In some embodiments, the ToD management parameters include not only ToD distribution time interval and number of OLT-G message loss, but also maximum timeout threshold of OLT-G loss. An initial time interval may first be calculated based on the ToD distribution time interval and the number of OLT-G message loss. Then the time interval triggering an ONU out-of-sync alarm is finally determined based on the initial time interval and said maximum timeout threshold of OLT-G loss. For example, when comparing the initial time interval with the maximum timeout threshold of OLT-G loss, if the initial time interval is greater than or equal to the maximum timeout threshold of OLT-G loss, the maximum timeout threshold of OLT-G loss is determined as the final time interval, otherwise the initial time interval is determined as the final time interval.

If the OLT-G message sent by said OLT with ToD information carried therein is received before said alarm timer expires, the retiming means resets said alarm timer and starts the timing anew. In some embodiments, before the alarm timer expires, the retiming means resets the alarm timer whenever an OLT-G message is received from the OLT. In this case, the ONU might or might not have suffered loss of ToD information. However, the number of consecutive ToD information loss is less than the configured number of OLT-G message loss, i.e., the condition for alarm reporting is not met.

If the OLT-G message sent by said OLT with ToD information carried therein has not been received when said alarm timer expires, the alarming means reports an out-of-sync alarm. If the OLT-G message sent by said OLT with ToD information carried therein has not been received when said alarm timer expires, it indicates that the number of consecutive ToD information loss has reached the configured number of OLT-G message loss, i.e., the condition for alarm reporting is met, and an out-of-sync alarm needs to be reported. In some embodiments, the ONU reports the out-of-sync alarm to the OLT. Upon receiving the out-of-sync alarm, the OLT reports it to the NMS. In some embodiments, the ONU reports the out-of-sync alarm to the ACS (Auto-Configuration Server). In some embodiments, the ONU reports the out-of-sync alarm to the OLT and the ACS at the same time. Upon receiving the out-of-sync alarm, the OLT reports it to the NMS. In some embodiments, due to optical fiber disconnection, communication loss and other unexpected reasons, the OLT might not be able to transmit the OLT-G message successfully to the ONU.

In some embodiments, the second apparatus 2 further comprises an alarm clearing means (not shown in the figure). Upon receiving the OLT-G message sent by said OLT with ToD information carried therein again after having reported the out-of-sync alarm, the alarm clearing means is used for resetting said alarm timer, starting the timing anew, and clearing the out-of-sync alarm. In some embodiments, the OLT is not able to transmit the OLT-G message successfully to the ONU due to communication loss or optical fiber disconnection. When the communication or optical fiber connection is restored between the OLT and the ONU, upon receiving the OLT-G message sent by the OLT again, the alarm clearing means resets the alarm timer, starts the timing anew, and clears the out-of-sync alarm.

In some embodiments, said ToD management parameters include ToD supportability report indication. Said managing means 22 comprises means for: obtaining the ToD supportability information corresponding to said ONU, generating an OMCI message according to said ToD supportability information, and sending the generated OMCI message to said OLT. In some embodiments, said ToD supportability report indication can be sent by defining the relevant OMCI, e.g., extending the OMCI response message, such as adding a ToD supportability attribute, to carry the ToD supportability information. In some embodiments, the ToD supportability information can be carried by the reserved fields as defined in the current OMCI.

It should be noted that the names of the modules or apparatuses involved in the present application are only examples and not intended to be limiting of the present application. Multiple modules or apparatuses may be implemented by one module or apparatus through software or hardware. Each module or apparatus may also be divided into multiple modules or apparatuses and implemented through software or hardware.

Fig. 8 shows an example system that can be used to implement the embodiments described in the present application.

In some embodiments, the system 1000 can function as any one of the processing devices in the embodiments of the present application. In some embodiments, the system 1000 may comprise one or more computer readable media having instructions thereon (e.g., system memory or NVM/storage device 1020) and one or more processors (e.g., processor(s) 1005) coupled with the one or more computer readable media and configured to execute the instructions to implement the modules and thereby perform the actions described in the present application.

For one embodiment, the system control module 1010 may comprise any appropriate interface controller to provide any appropriate interface to at least one of the processor(s) 1005 and/or any appropriate device or component in communication with the system control module 1010.

The system control module 1010 may comprise a memory controller module 1030 to provide the interface to the system memory 1015. The memory controller module 1030 maybe a hardware module, a software module, and/or a firmware module.

The system memory 1015 me be used for, for example, loading and storing data and/or instructions for the system 1000. For one embodiment, the system memory 1015 may comprise any appropriate volatile memory, e.g., appropriate DRAM. In some embodiments, the system memory 1015 may comprise double data rate 4 synchronous dynamic random-access memory (DDR4SDRAM).

For one embodiment, the system control module 1010 may comprise one or more input/output (I/O) controllers to provide the interface to the NVM/storage device 1020 and the communication interface(s) 1025.

For example, the NVM/storage device 1020 may be used for storing data and/or instructions. The NVM/storage device 1020 may comprise any appropriate non-volatile memory (e.g., flash), and/or may comprise any appropriate non-volatile storage device(s) (e.g., one or more hard disk drives (HDD), one or more optical disk (CD) drives and/or one or more digital versatile disk (DVD) drives).

The NVM/storage device 1020 may comprise the storage resources that are physically part of the device on which the system 1000 is installed, or may be accessed by that device without necessarily being part of that device. For example, the NVM/storage device 1020 may be accessed via the communication interface(s) 1025 through network.

The communication interface(s) 1025 may provide the system 1000 with the interface to communicate through one or more networks and/or with any other appropriate device. The system 1000 may perform wireless communication with one or more components of the wireless network according to any standard and/or protocol of one or more wireless network standards and/or protocols.

For one embodiment, at least one of the processor(s) 1005 may be packed together with the logic of one or more controllers (e.g., memory controller module 1030) of the system control module 1010. For one embodiment, at least one of the processor(s) 1005 may be packed together with the logic of one or more controllers of the system control module 1010 to form a system in package (SiP). For one embodiment, at least one of the processor(s) 1005 and the logic of one or more controllers of the system control module 1010 may be integrated on the same die. For one embodiment, at least one of the processor(s) 1005 and the logic of one or more controllers of the system control module 1010 may be integrated on the same die to form a system on chip (SoC).

In the embodiments, the system 1000 may be but not limited to: server, workstation, desktop computer or mobile computing device (e.g., laptop computing device, handheld computing device, tablet computer, netbook, etc.). In the embodiments, the system 1000 may have more or less components and/or different architectures. For example, in some embodiments, the system 1000 comprises one or more cameras, keyboard, liquid crystal display (LCD) screen (including touchscreen display), non-volatile memory port, multiple antennas, graphic chip, application specific integrated circuit (ASIC) and speaker.

The present application also provides an OLT, wherein said OLT comprises:
a memory for storing one or more programs;
one or more processors connected with said memory,
when executed by said one or more processors, said one or more programs cause said one or more processors to execute the method for ToD management in OLT described in the present application.

The present application also provides an ONU, wherein said ONU comprises:
a memory for storing one or more programs;
one or more processors connected with said memory,
when executed by said one or more processors, said one or more programs cause said one or more processors to execute the method for ToD management in ONU described in the present application.

The present application also provides a computer readable storage medium with computer programs stored thereon, wherein said computer programs may be executed by a processor to execute the method for ToD management described in the present application.

The present application also provides a computer program product, wherein said computer program product, when executed by a device, causes the device to execute the method for ToD management described in the present application.

To those skilled in the art, it is apparent that the present application is not limited to the details of the illustrative embodiments mentioned above, and can be implemented in other specific forms without departing from the scope of protection, which is defined by the claims. Therefore, from any perspective, the embodiments should be regarded as illustrative and not restrictive. The scope of the present application is limited by the appended claims and not the depiction above. Therefore, all variations within the meaning and scope of the claims are intended to be covered within the present application. No reference numerals in the claims should be regarded as limiting the involved claims. In addition, it is apparent that the word "comprise" or "include" does not exclude other units or steps, and singularity does not exclude plurality. A plurality of units or apparatuses stated in a system claim may also be implemented by a single unit or apparatus through software or hardware. Words like the first and second are used to indicate names and not to indicate any specific order.

## Claims

1. A method for Time of Day, ToD, management in an Optical Line Terminal, OLT, wherein the method comprises: obtaining (S11) ToD management parameters configured based on extended management objects in the Management Information Base, MIB; generating (S12) an Optical Network Unit Management and Control Interface, OMCI, message based on an extended OLT-G managed entity and sending said OMCI message to said Optical Network Unit, ONU, wherein said OMCI message carries therein said ToD management parameters, wherein said ToD management parameters include at least a ToD distribution time interval.

2. The method according to claim 1, wherein said ToD management parameters include any one of the following: number of OLT-G message loss; maximum timeout threshold of OLT-G loss; ToD supportability report indication; ToD enablement information.

3. The method according to claim 1 or 2, wherein the method further comprises: sending an OLT-G message with ToD information carried therein to said ONU according to said ToD distribution time interval.

4. The method according to claim 3, wherein said sending an OLT-G message with ToD information carried therein to said ONU according to said ToD distribution time interval comprises: starting an OLT-G distribution timer, wherein the expiration time of said OLT-G distribution timer is set as said ToD distribution time interval; each time when said OLT-G distribution timer expires, sending an OLT-G message with ToD information carried therein to said ONU, resetting said OLT-G distribution timer, and starting the timing anew.

5. The method according to any one of claims 1 to 4, wherein following said step of obtaining (S11) ToD management parameters configured based on the extended management objects in the MIB, the method further comprises: saving said ToD management parameters in a database.

6. A method for Time of Day, ToD, management in an Optical Network Unit, ONU, wherein the method comprises: receiving (S21) the Optical Network Unit Management and Control Interface, OMCI, message generated based on an extended OLT-G managed entity and sent by the Optical Line Terminal, OLT, wherein said OMCI message carries therein the ToD management parameters configured based on extended management objects in the Management Information Base, MIB; performing (S22) the corresponding ToD management operations according to said ToD management parameters, wherein said ToD management parameters include at least a ToD distribution time interval.

7. The method according to claim 6, wherein said performing (S22) the corresponding ToD management operations according to said ToD management parameters comprises: determining the time interval triggering an ONU out-of-sync alarm according to said ToD management parameters and starting an alarm timer, wherein the expiration time of said alarm timer is set as said time interval; if the OLT-G message sent by said OLT with ToD information carried therein is received before said alarm timer expires, resetting said alarm timer and starting the timing anew; if the OLT-G message sent by said OLT with ToD information carried therein has not been received when said alarm timer expires, reporting an out-of-sync alarm.

8. The method according to claim 7, wherein said ToD management parameters include maximum timeout threshold of OLT-G loss, and said determining the time interval triggering an ONU out-of-sync alarm according to said ToD management parameters comprises: determining said maximum timeout threshold of OLT-G loss as the time interval triggering an ONU out-of-sync alarm.

9. The method according to claim 7, wherein said ToD management parameters further include a number of OLT-G message loss, and said determining the time interval triggering an ONU out-of-sync alarm according to said ToD management parameters comprises: calculating the time interval triggering an ONU out-of-sync alarm according to said ToD distribution time interval and said number of OLT-G message loss.

10. The method according to any one of claims 7 to 9, wherein the method further comprises: upon receiving the OLT-G message sent by said OLT with ToD information carried therein again after having reported the out-of-sync alarm, resetting said alarm timer, starting the timing anew, and clearing the out-of-sync alarm.

11. The method according to claim 6, wherein said ToD management parameters include ToD supportability report indication, and said performing the corresponding ToD management operations according to said ToD management parameters comprises: obtaining the ToD supportability information corresponding to said ONU, generating an OMCI message according to said ToD supportability information, and sending the generated OMCI message to said OLT.

12. A first apparatus (1) for Time of Day, ToD, management in an Optical Line Terminal, OLT, wherein the first apparatus comprises: means (11) for obtaining ToD management parameters configured based on extended management objects in the Management Information Base, MIB; means (12) for generating an Optical Network Unit Management and Control Interface, OMCI, message based on an extended OLT-G managed entity and sending said OMCI message to said Optical Network Unit, ONU, wherein said OMCI message carries therein said ToD management parameters, wherein said ToD management parameters include at least a ToD distribution time interval.

13. A second apparatus (2) for Time of Day, ToD, management in an Optical Network Unit, ONU, wherein the second apparatus (2) comprises: means (21) for receiving the Optical Network Unit Management and Control Interface, OMCI, message generated based on an extended OLT-G managed entity and sent by the Optical Line Terminal, OLT, wherein said OMCI message carries therein the ToD management parameters configured based on extended management objects in the Management Information Base, MIB; means (22) for performing the corresponding ToD management operations according to said ToD management parameters, wherein said ToD management parameters include at least a ToD distribution time interval.

14. An Optical Line Terminal, OLT, wherein said OLT comprises: a memory for storing one or more programs; one or more processors(1005) connected with said memory, when executed by said one or more processors (1005), said one or more programs cause said one or more processors (1005) to perform the following operations: obtaining Time of Day, ToD, management parameters configured based on extended management objects in the Management Information Base, MIB; generating an Optical Network Unit Management and Control Interface, OMCI, message based on an extended OLT-G managed entity and sending said OMCI message to said Optical Network Unit, ONU, wherein said OMCI message carries therein said ToD management parameters, wherein said ToD management parameters include at least a ToD distribution time interval.

15. An Optical Network Unit, ONU, wherein said ONU comprises: a memory for storing one or more programs; one or more processors (1005) connected with said memory, when executed by said one or more processors (1005), said one or more programs cause said one or more processors (1005) to perform the following operations: receiving the Optical Network Unit Management and Control Interface, OMCI, message generated based on an extended OLT-G managed entity and sent by the Optical Line Terminal, OLT, wherein said OMCI message carries therein the Time of Day, ToD, management parameters configured based on extended management objects in the Management Information Base, MIB; performing the corresponding ToD management operations according to said ToD management parameters, wherein said ToD management parameters include at least a ToD distribution time interval.

16. A computer readable storage medium (1020) with computer programs stored thereon, wherein said computer programs may be executed by a processor (1005) and thereby performing the following operations: obtaining Time of Day, ToD, management parameters configured based on extended management objects in the Management Information Base, MIB; generating an Optical Network Unit Management and Control Interface, OMCI, message based on an extended OLT-G managed entity and sending said OMCI message to said Optical Network Unit, ONU, wherein said OMCI message carries therein said ToD management parameters, wherein said ToD management parameters include at least a ToD distribution time interval.

17. A computer readable storage medium (1020) with computer programs stored thereon, wherein said computer programs may be executed by a processor (1005) and thereby performing the following operations: receiving the Optical Network Unit Management and Control Interface, OMCI, message generated based on an extended OLT-G managed entity and sent by the Optical Line Terminal, OLT, wherein said OMCI message carries therein the Time of Day, ToD, management parameters configured based on extended management objects in the Management Information Base, MIB; performing the corresponding ToD management operations according to said ToD management parameters, wherein said ToD management parameters include at least a ToD distribution time interval.

## Patentansprüche

1. Verfahren für eine Tageszeit(ToD)-Verwaltung in einem optischen Leitungsendgerät, OLT, wobei das Verfahren Folgendes umfasst: Erhalten (S11) von ToD-Verwaltungsparametern, die auf Basis von erweiterten Verwaltungsobjekten in der Verwaltungsinformationsbasis, MIB, ausgelegt sind, Erzeugen (S12) einer optischen Netzwerkeinheitsverwaltungs- und - steuerschnittstellen(OMCI)-Nachricht auf Basis einer erweiterten OLT-G-verwalteten Entität und Senden der OMCI-Nachricht an die optische Netzwerkeinheit, ONU, wobei die OMCI-Nachricht die ToD-Verwaltungsparameter enthält, wobei die ToD-Verwaltungsparameter mindestens ein ToD-Verteilungszeitintervall beinhalten.

2. Verfahren nach Anspruch 1, wobei die ToD-Verwaltungsparameter eines von Folgendem beinhalten: einer Anzahl von OLT-G-Nachrichtenverlusten; einem maximalen Zeitüberschreitungsschwellwert von OLT-G-Verlust; einer ToD-Unterstützbarkeitsmeldungsanzeige; ToD-Aktivierungsinformationen.

3. Verfahren nach Anspruch 1 oder 2, wobei das Verfahren ferner Folgendes umfasst: Senden einer OLT-G-Nachricht mit darin enthaltenen ToD-Informationen an die ONU gemäß dem ToD-Verteilungszeitintervall.

4. Verfahren nach Anspruch 3, wobei das Senden einer OLT-G-Nachricht mit darin enthaltenen ToD-Informationen an die ONU gemäß dem ToD-Verteilungszeitintervall Folgendes umfasst: Starten eines OLT-G-Verteilungstimers, wobei die Ablaufzeit des OLT-G-Verteilungstimers als das ToB-Verteilungszeitintervall eingestellt ist; bei jedem Ablauf des OLT-G-Verteilungstimers Senden einer OLT-G-Nachricht mit darin enthaltenen ToD-Informationen an die ONU, Rücksetzen des OLT-G-Verteilungstimers und erneutes Starten des Timings.

5. Verfahren nach einem der Ansprüche 1 bis 4, wobei das Verfahren nach dem Schritt des Erhaltens (S11) von ToD-Verwaltungsparametern, die auf Basis der erweiterten Verwaltungsobjekte in der MIB ausgelegt sind, ferner Folgendes umfasst: Speichern der ToD-Verwaltungsparameter in einer Datenbank.

6. Verfahren für eine Tageszeit(ToD)-Verwaltung in einer optischen Netzwerkeinheit, ONU, wobei das Verfahren Folgendes umfasst: Empfangen (S21) der optischen Netzwerkeinheitsverwaltungs- und -steuerschnittstellen(OMCI)-Nachricht, die auf Basis einer erweiterten OLT-G-verwalteten Entität erzeugt und vom optischen Leitungsendgerät, OLT, gesendet wurde, wobei die OMCI-Nachricht darin die ToD-Verwaltungsparameter enthält, die auf Basis von erweiterten Verwaltungsobjekten in der Verwaltungsinformationsbasis, MIB, ausgelegt sind; Durchführen (S22) der entsprechenden ToD-Verwaltungsoperationen gemäß den ToD-Verwaltungsparametern, wobei die ToD-Verwaltungsparameter mindestens ein ToD-Verteilungszeitintervall beinhalten.

7. Verfahren nach Anspruch 6, wobei das Durchführen (S22) der entsprechenden ToD-Verwaltungsoperationen gemäß den ToD-Verwaltungsparametern Folgendes umfasst: Bestimmen des Zeitintervalls, das einen ONU-Asynchronitätsalarm auslöst, gemäß den ToD-Verwaltungsparametern und Starten eines Alarmtimers, wobei die Ablaufzeit des Alarmtimers als das Zeitintervall eingestellt ist; wenn die vom OLT gesendete OLT-G-Nachricht mit darin enthaltenen ToD-Informationen empfangen wird, bevor der Alarmtimer abläuft, Rücksetzen des Alarmtimers und erneutes Starten des Timings; wenn die vom OLT gesendete OLT-G-Nachricht mit darin enthaltenen ToD-Informationen noch nicht empfangen wurde, wenn der Alarmtimer abläuft, Melden eines Asynchronitätsalarms.

8. Verfahren nach Anspruch 7, wobei die ToD-Verwaltungsparameter einen maximalen Zeitüberschreitungsschwellwert eines OLT-G-Verlusts beinhalten und das Bestimmen des Zeitintervalls, das einen ONU-Asynchronitätsalarm auslöst, gemäß den ToD-Verwaltungsparametern Folgendes umfasst: Bestimmen des maximalen Zeitüberschreitungsschwellwerts eines OLT-G-Verlusts als das Zeitintervall, das einen ONU-Asynchronitätsalarm auslöst.

9. Verfahren nach Anspruch 7, wobei die ToD-Verwaltungsparameter ferner eine Anzahl von OLT-G-Nachrichtenverlusten beinhalten und das Bestimmen des Zeitintervalls, das einen ONU-Asynchronitätsalarm auslöst, gemäß den ToD-Verwaltungsparametern Folgendes umfasst: Berechnen des Zeitintervalls, das einen ONU-Asynchronitätsalarm erzeugt, gemäß dem ToD-Verteilungszeitintervall und der Anzahl von OLT-G-Nachrichtenverlusten.

10. Verfahren nach einem der Ansprüche 7 bis 9, wobei das Verfahren ferner Folgendes umfasst: nach dem erneuten Empfangen der OLT-G-Nachricht, die vom OLT mit darin enthaltenen ToD-Informationen gesendet wurde, nachdem der Asynchronitätsalarm gemeldet wurde, Rücksetzen des Alarmtimers, erneutes Starten des Timings und Löschen des Asynchronitätsalarms.

11. Verfahren nach Anspruch 6, wobei die ToD-Verwaltungsparameter eine ToD-Unterstützbarkeitsmeldungsanzeige beinhalten und das Durchführen der entsprechenden ToD-Verwaltungsoperationen gemäß den ToD-Verwaltungsparametern Folgendes umfasst: Erhalten der ToD-Unterstützbarkeitsinformationen, die der ONU entsprechen, Erzeugen einer OMCI-Nachricht gemäß den ToD-Unterstützbarkeitsinformationen und Senden der erzeugten OMCI-Nachricht an das OLT.

12. Erste Vorrichtung (1) für eine Tageszeit(ToD)-Verwaltung in einem optischen Leitungsendgerät, OLT, wobei die erste Vorrichtung Folgendes umfasst: Mittel (11) zum Erhalten von ToD-Verwaltungsparametern, die auf Basis von erweiterten Verwaltungsobjekten in der Verwaltungsinformationsbasis, MIB, ausgelegt sind; Mittel (12) zum Erzeugen einer optischen Netzwerkeinheitsverwaltungs- und -steuerschnittstellen(OMCI)-Nachricht auf Basis einer erweiterten OLT-G-verwalteten Entität und Senden der OMCI-Nachricht an die optische Netzwerkeinheit, ONU, wobei die OMCI-Nachricht die ToD-Verwaltungsparameter enthält, wobei die ToD-Verwaltungsparameter mindestens ein ToD-Verteilungszeitintervall beinhalten.

13. Zweite Vorrichtung (2) für eine Tageszeit(ToD)-Verwaltung in einer optischen Netzwerkeinheit, ONU, wobei die zweite Vorrichtung (2) Folgendes umfasst: Mittel (21) zum Empfangen der optischen Netzwerkeinheitsverwaltungs- und - steuerschnittstellen(OMCI)-Nachricht, die auf Basis einer erweiterten OLT-G-verwalteten Entität erzeugt und vom optischen Leitungsendgerät, OLT, gesendet wurde, wobei die OMCI-Nachricht darin die ToD-Verwaltungsparameter enthält, die auf Basis von erweiterten Verwaltungsobjekten in der Verwaltungsinformationsbasis, MIB, ausgelegt sind; Mittel (22) zum Durchführen der entsprechenden ToD-Verwaltungsoperationen gemäß den ToD-Verwaltungsparametern, wobei die ToD-Verwaltungsparameter mindestens ein ToD-Verteilungszeitintervall beinhalten.

14. Optisches Leitungsendgerät, OLT, wobei das OLT Folgendes umfasst: einen Speicher zum Speichern von einem oder mehreren Programmen; einen oder mehrere Prozessoren (1005), die mit dem Speicher verbunden sind, wenn das eine oder die mehreren Programme, wenn sie von dem einen oder den mehreren Prozessoren (1005) ausgeführt werden, den einen oder die mehreren Prozessoren (1005) veranlassen, die folgenden Operationen durchzuführen: Erhalten von Tageszeit(ToD)-Verwaltungsparametern, die auf Basis von erweiterten Verwaltungsobjekten in der Verwaltungsinformationsbasis, MIB, ausgelegt sind; Erzeugen einer optischen Netzwerkeinheitsverwaltungs- und -steuerschnittstellen(OMCI)-Nachricht auf Basis einer erweiterten OLT-G-verwalteten Entität und Senden der OMCI-Nachricht an die optische Netzwerkeinheit, ONU, wobei die OMCI-Nachricht die ToD-Verwaltungsparameter enthält, wobei die ToD-Verwaltungsparameter mindestens ein ToD-Verteilungszeitintervall beinhalten.

15. Optische Netzwerkeinheit, ONU, wobei die ONU Folgendes umfasst: einen Speicher zum Speichern von einem oder mehreren Programmen; einen oder mehrere Prozessoren (1005), die mit dem Speicher verbunden sind, wenn das eine oder die mehreren Programme, wenn sie von dem einen oder den mehreren Prozessoren (1005) ausgeführt werden, den einen oder die mehreren Prozessoren (1005) veranlassen, die folgenden Operationen durchzuführen:
Empfangen der optischen Netzwerkeinheitsverwaltungs- und - steuerschnittstellen(OMCI)-Nachricht, die auf Basis einer erweiterten OLT-G-verwalteten Entität erzeugt und vom optischen Leitungsendgerät, OLT gesendet wurde, wobei die OMCI-Nachricht die Tageszeit(ToD)-Verwaltungsparameter darin enthält, die auf Basis von erweiterten Verwaltungsobjekten in der Verwaltungsinformationsbasis, MIB, ausgelegt sind; Durchführen der entsprechenden ToD-Verwaltungsoperationen gemäß den ToD-Verwaltungsparametern, wobei die ToD-Verwaltungsparameter mindestens ein ToD-Verteilungszeitintervall beinhalten.

16. Computerlesbares Speichermedium (1020) mit darauf gespeicherten Computerprogrammen, wobei die Computerprogramme durch einen Prozessor (1005) ausgeführt werden können, wodurch die folgenden Operationen durchgeführt werden: Erhalten von Tageszeit(ToD)-Verwaltungsparametern, die auf Basis von erweiterten Verwaltungsobjekten in der Verwaltungsinformationsbasis, MIB, ausgelegt sind; Erzeugen einer optischen Netzwerkeinheitsverwaltungs- und - steuerschnittstellen(OMCI)-Nachricht auf Basis einer erweiterten OLT-G-verwalteten Entität und Senden der OMCI-Nachricht an die optische Netzwerkeinheit, ONU, wobei die OMCI-Nachricht die ToD-Verwaltungsparameter darin enthält, wobei die ToD-Verwaltungsparameter mindestens ein ToD-Verteilungszeitintervall beinhalten.

17. Computerlesbares Speichermedium (1020) mit darauf gespeicherten Computerprogrammen, wobei die Computerprogramme durch einen Prozessor (1005) ausgeführt werden können, wodurch die folgenden Operationen durchgeführt werden: Empfangen der optischen Netzwerkeinheitsverwaltungs- und - steuerschnittstellen(OMCI)-Nachricht, die auf Basis einer erweiterten OLT-G-verwalteten Entität erzeugt und vom optischen Leitungsendgerät, OLT, gesendet wurde, wobei die OMCI-Nachricht darin die Tageszeit(ToD)-Verwaltungsparameter enthält, die auf Basis von erweiterten Verwaltungsobjekten in der Verwaltungsinformationsbasis, MIB, ausgelegt sind; Durchführen der entsprechenden ToD-Verwaltungsoperationen gemäß den ToD-Verwaltungsparametern, wobei die ToD-Verwaltungsparameter mindestens ein ToD-Verteilungszeitintervall beinhalten.

## Revendications

1. Procédé de gestion de l'heure du jour, ToD, dans un terminal de ligne optique, OLT, dans lequel le procédé comprend : l'obtention (S11) de paramètres de gestion ToD configurés sur la base d'objets de gestion étendus dans la base d'informations de gestion, MIB ; la génération (S12) d'un message d'interface de gestion et de contrôle d'unité de réseau optique, OMCI, sur la base d'une entité gérée OLT-G étendue et l'envoi dudit message OMCI à ladite unité de réseau optique, ONU, dans lequel ledit message OMCI transporte lesdits paramètres de gestion ToD, dans lequel lesdits paramètres de gestion ToD comportent au moins un intervalle de temps de distribution de ToD.

2. Procédé selon la revendication 1, dans lequel lesdits paramètres de gestion ToD comportent l'un des éléments suivants : un nombre de pertes de messages OLT-G ; un seuil de délai d'attente maximal d'une perte OLT-G ; une indication de rapport de capacité de prise en charge de ToD ; des informations d'activation de ToD.

3. Procédé selon la revendication 1 ou 2, dans lequel le procédé comprend en outre : l'envoi d'un message OLT-G transportant des informations ToD à ladite ONU selon ledit intervalle de temps de distribution de ToD.

4. Procédé selon la revendication 3, dans lequel ledit envoi d'un message OLT-G transportant des informations ToD à ladite ONU selon ledit intervalle de temps de distribution de ToD comprend : le démarrage d'un temporisateur de distribution de ToD, dans lequel le temps d'expiration dudit temporisateur de distribution de ToD est défini comme ledit intervalle de temps de distribution de ToD ; chaque fois que ledit temporisateur de distribution de ToD expire, l'envoi d'un message OLT-G transportant des informations ToD à ladite ONU, la réinitialisation dudit temporisateur de distribution de ToD, et le redémarrage de la temporisation.

5. Procédé selon l'une des revendications 1 à 4, dans lequel après ladite étape d'obtention (S11) de paramètres de gestion ToD configurés sur la base des objets de gestion étendus dans la MIB, le procédé comprend en outre : la sauvegarde desdits paramètres de gestion ToD dans une base de données.

6. Procédé de gestion de l'heure du jour, ToD, dans une unité de réseau optique, ONU, dans lequel le procédé comprend : la réception (S21) du message d'interface de gestion et de contrôle d'unité de réseau optique, OMCI, généré sur la base d'une entité gérée OLT-G étendue et envoyé par le terminal de ligne optique, OLT, dans lequel ledit message OMCI transporte les paramètres de gestion ToD configurés sur la base d'objets de gestion étendus dans la base d'informations de gestion, MIB : la réalisation (S22) des opérations de gestion ToD correspondantes selon lesdits paramètres de gestion ToD, dans lequel lesdits paramètres de gestion ToD comportent au moins un intervalle de temps de distribution de ToD.

7. Procédé selon la revendication 6, dans lequel ladite réalisation (S22) des opérations de gestion ToD correspondantes selon lesdits paramètres de gestion ToD comprend : la détermination de l'intervalle de temps déclenchant une alarme de désynchronisation d'ONU selon lesdits paramètres de gestion ToD et le démarrage d'un temporisateur d'alarme, dans lequel le temps d'expiration dudit temporisateur d'alarme est défini comme ledit intervalle de temps ; si le message OLT-G envoyé par ledit OLT transportant des informations ToD est reçu avant que ledit temporisateur d'alarme n'expire, la réinitialisation dudit temporisateur d'alarme et le redémarrage de la temporisation ; si le message OLT-G envoyé par ledit OLT transportant des informations ToD n'a pas été reçu lorsque ledit temporisateur d'alarme expire, le signalement d'une alarme de désynchronisation.

8. Procédé selon la revendication 7, dans lequel lesdits paramètres de gestion ToD comportent un seuil de délai d'attente maximal d'une perte OLT-G, et ladite détermination de l'intervalle de temps déclenchant une alarme de désynchronisation d'ONU selon lesdits paramètres de gestion ToD comprend : la détermination dudit seuil de délai d'attente maximal d'une perte OLT-G comme intervalle de temps déclenchant une alarme de désynchronisation d'ONU.

9. Procédé selon la revendication 7, dans lequel lesdits paramètres de gestion ToD comportent en outre un nombre de pertes de messages OLT-G, et ladite détermination de l'intervalle de temps déclenchant une alarme de désynchronisation d'ONU selon lesdits paramètres de gestion ToD comprend : le calcul de l'intervalle de temps déclenchant une alarme de désynchronisation d'ONU selon ledit intervalle de temps de distribution de ToD et ledit nombre de pertes de messages OLT-G.

10. Procédé selon l'une des revendications 7 à 9, dans lequel le procédé comprend en outre : sur réception du message OLT-G envoyé par ledit OLT transportant des informations ToD à nouveau après avoir signalé l'alarme de désynchronisation, la réinitialisation dudit temporisateur d'alarme, le redémarrage de la temporisation, et l'effacement de l'alarme de désynchronisation.

11. Procédé selon la revendication 6, dans lequel lesdits paramètres de gestion ToD comportent une indication de rapport de capacité de prise en charge de ToD, et ladite réalisation des opérations de gestion ToD correspondantes selon lesdits paramètres de gestion ToD comprend : l'obtention des informations de capacité de prise en charge ToD correspondant à ladite ONU, la génération d'un message OMCI selon lesdites informations de capacité de prise en charge ToD, et l'envoi du message OMCI généré audit OLT.

12. Premier appareil (1) de gestion de l'heure du jour, ToD, dans un terminal de ligne optique, OLT, dans lequel le premier appareil comprend : des moyens (11) pour obtenir des paramètres de gestion ToD configurés sur la base d'objets de gestion étendus dans la base d'informations de gestion, MIB ; des moyens (12) pour générer un message d'interface de gestion et de contrôle d'unité de réseau optique, OMCI, sur la base d'une entité gérée OLT-G étendue et envoyer ledit message OMCI à ladite unité de réseau optique, ONU, dans lequel ledit message OMCI transporte lesdits paramètres de gestion ToD, dans lequel lesdits paramètres de gestion ToD comportent au moins un intervalle de temps de distribution de ToD.

13. Deuxième appareil (2) de gestion de l'heure du jour, ToD, dans une unité de réseau optique, ONU, dans lequel le deuxième appareil (2) comprend : des moyens (21) pour recevoir le message d'interface de gestion et de contrôle d'unité de réseau optique, OMCI, généré sur la base d'une entité gérée OLT-G étendue et envoyé par le terminal de ligne optique, OLT, dans lequel ledit message OMCI transporte les paramètres de gestion ToD configurés sur la base d'objets de gestion étendus dans la base d'informations de gestion, MIB ; des moyens (22) pour réaliser les opérations de gestion ToD correspondantes selon lesdits paramètres de gestion ToD, dans lequel lesdits paramètres de gestion ToD comportent au moins un intervalle de temps de distribution de ToD.

14. Terminal de ligne optique, OLT, dans lequel ledit OLT comprend : une mémoire pour stocker un ou plusieurs programmes ; un ou plusieurs processeurs (1005) connectés à ladite mémoire, lorsqu'ils sont exécutés par lesdits un ou plusieurs processeurs (1005), lesdits un ou plusieurs programmes amènent lesdits un ou plusieurs processeurs (1005) à effectuer les opérations suivantes :
obtenir des paramètres de gestion de l'heure du jour, ToD, configurés sur la base d'objets de gestion étendus dans la base d'informations de gestion, MIB ; générer un message d'interface de gestion et de contrôle d'unité de réseau optique, OMCI, sur la base d'une entité gérée OLT-G étendue et envoyer ledit message OMCI à ladite unité de réseau optique, ONU, dans lequel ledit message OMCI transporte lesdits paramètres de gestion ToD, dans lequel lesdits paramètres de gestion ToD comportent au moins un intervalle de temps de distribution de ToD.

15. Unité de réseau optique, ONU, dans laquelle ladite ONU comprend : une mémoire pour stocker un ou plusieurs programmes ; un ou plusieurs processeurs (1005) connectés à ladite mémoire, lorsqu'ils sont exécutés par lesdits un ou plusieurs processeurs (1005), lesdits un ou plusieurs programmes amènent lesdits un ou plusieurs processeurs (1005) à effectuer les opérations suivantes : recevoir le message d'interface de gestion et de contrôle d'unité de réseau optique, OMCI, généré sur la base d'une entité gérée OLT-G étendue et envoyé par le terminal de ligne optique, OLT, dans laquelle ledit message OMCI transporte les paramètres de gestion de l'heure du jour, ToD, configurés sur la base d'objets de gestion étendus dans la base d'informations de gestion, MIB ; réaliser les opérations de gestion ToD correspondantes selon lesdits paramètres de gestion ToD, dans laquelle lesdits paramètres de gestion ToD comportent au moins un intervalle de temps de distribution de ToD.

16. Support de stockage lisible par ordinateur (1020) sur lequel sont stockés des programmes informatiques, dans lequel lesdits programmes informatiques peuvent être exécutés par un processeur (1005) et effectuer ainsi les opérations suivantes : obtenir des paramètres de gestion de l'heure du jour, ToD, configurés sur la base d'objets de gestion étendus dans la base d'informations de gestion, MIB ; générer un message d'interface de gestion et de contrôle d'unité de réseau optique, OMCI, sur la base d'une entité gérée OLT-G étendue et envoyer ledit message OMCI à ladite unité de réseau optique, ONU, dans lequel ledit message OMCI transporte lesdits paramètres de gestion ToD, dans lequel lesdits paramètres de gestion ToD comportent au moins un intervalle de temps de distribution de ToD.

17. Support de stockage lisible par ordinateur (1020) sur lequel sont stockés des programmes informatiques, dans lequel lesdits programmes informatiques peuvent être exécutés par un processeur (1005) et effectuer ainsi les opérations suivantes : recevoir le message d'interface de gestion et de contrôle d'unité de réseau optique, OMCI, généré sur la base d'une entité gérée OLT-G étendue et envoyé par le terminal de ligne optique, OLT, dans lequel ledit message OMCI transporte les paramètres de gestion de l'heure du jour, ToD, configurés sur la base d'objets de gestion étendus dans la base d'informations de gestion, MIB ; réaliser les opérations de gestion ToD correspondantes selon lesdits paramètres de gestion ToD, dans lequel lesdits paramètres de gestion ToD comportent au moins un intervalle de temps de distribution de ToD.
